# EUROPEAN PATENT SPECIFICATION

(11) **EP 1 269 622 B1**
(45) Date of publication and mention of the grant of the patent: **20.07.2005**
(21) Application number: 01905981.5
(22) Date of filing: 23.02.2001
(51) Int. Cl.: H02P 7/74, D06F 37/30

(54) **MOTOR CONTROL FOR TWO MOTORS**
MOTORSTEUERUNG FÜR ZWEI MOTOREN
COMMANDE DE DEUX MOTEURS

(30) Priority: 29.03.2000 GB 0007445
(43) Date of publication of application: 02.01.2003
(73) Proprietor: Dyson Technology Limited, Malmesbury, Wiltshire SN16 0RP (GB)
(72) Inventor: RAIMONDI, Giovanni Mario, Solihul B90 1HL (GB)
(74) Representative: Cage, John David
(86) International application number: PCT/GB2001/000768
(87) International publication number: WO 2001/073939

(56) References cited:
- EP-A- 0 671 810
- DE-A- 2 815 595
- DE-A- 3 004 085
- DE-A- 3 036 194
- US-A- 4 549 119
- US-A- 5 859 509

## Description

The present invention relates to a drive for driving a load in an electrical apparatus and to electrical apparatus incorporating such a drive. It can be used in laundry appliances such as washing machines or washer-dryers, but is not limited to use in such appliances.

Motors are widely used in appliances for a variety of purposes. In laundry appliances such as washing machines, washer-dryers and dryers, a motor is used to rotate a drum which holds clothes. The drum is required to rotate at a range of speeds, from a relatively slow rotational speed of around 50rpm during a washing cycle to a fast rotational speed of 1600rpm or more during a spin cycle. The washing load within the drum can be 11kg or more in a domestic machine. Clearly, the motor which rotates the drum is required to operate over a wide range of conditions. The motor is typically an ac motor which is powered by the mains power supply. In Europe, the ac motor is usually a universal motor.

It is known, in the field of traction motors for vehicles, to drive two dc motors in a way that switches between driving the motors in series or in parallel according to the speed and torque requirements of the vehicle at a particular time. In both the series and parallel arrangements, the motors are driven with a dc supply. UK Patent 1,422,161, US-A-4,549,119 and US-A-5,859,509 show examples of this kind of arrangement.

It is also known to switch two ac motors in series or in parallel, DE-A-3 004 085.

The present invention seeks to provide an improved way of operating an electrical apparatus that includes two motors.

Accordingly, a first aspect of the invention provides a drive for driving a load in an electrical apparatus, the drive comprising first and second motors for coupling to a power supply, outputs of the motors being used to drive the load, and switching means for switching the motors between:
- a series configuration, in which the motors are connected in series across the power supply and driven with a dc supply; and,
- a parallel configuration in which the motors are connected in parallel across the power supply and driven with an ac supply.

This arrangement has the advantages that the current drawn at low speed is half that which would be required with the motors connected in parallel, with an associated reduction in absolute current harmonics. Furthermore, at low speed, the overall terminal voltage of the series-connected motors is double that of parallel-connected motors, giving a smaller firing angle (i.e. greater conduction period) which reduces normalised harmonic content and improves the power factor. Wear of the two motor brushes is unequal with dc, reducing the life of the motor significantly. Switching to ac at high speed, at which most brush wear occurs, gives more even brush wear and so a longer motor life.

Preferably, the power supply is an ac supply and, in the series configuration, the switching means switches a rectifier across the ac supply to provide the dc supply. Freewheeling current through the bridge rectifier during the time that the power switching device (triac) is switched off gives a higher r.m.s. current on the dc side of the bridge rectifier than on the ac side, and therefore greater motor torque than would normally be expected from a given ac input current. This has the advantage that smaller-stack motors can be specified than would otherwise be required to give the same output torque with ac supply at low speed. Also, the bridge rectifier and associated components only need to be rated to take the current when the motors are connected in series, thus reducing the component cost and size. Furthermore, as the bridge rectifier dissipates heat only during low-speed operation, a smaller heat sink is required. Switching the bridge rectifier out of circuit at higher speeds means that under these conditions an inductive load is seen by the supply and the firing angle is reduced, which together reduce the harmonic content of the supply current.

The described embodiments show a laundry appliance with the motors being used to rotate a drum which holds clothing items, but the invention can be applied to other forms of electrical apparatus.

Another aspect of the invention provides a method of operating a drive for driving a load in an electrical apparatus.

Embodiments of the invention will now be described with reference to the accompanying drawings, in which:
Figure 1 is a rear view of a washing machine having two motors;
Figure 2 is a cross-sectional, partly schematic view through the machine of Figure 1;
Figure 3A shows apparatus for controlling the motors in the machine of Figure 1, with the apparatus arranged to drive the motors in series with a dc supply;
Figure 3B shows the motors in series for driving the load in a first direction and Figure 3C shows the motors in series for driving the load in a reverse direction;
Figure 4A shows the motor control apparatus arranged to drive the motors in parallel with an ac supply;
Figure 4B shows the motors in parallel with the full stator winding in circuit and Figure 4C shows the motors in parallel with part of the stator winding in circuit;
Figure 5 shows the motor control apparatus in a safe, unpowered state;
Figure 6 shows an equivalent circuit of the bridge rectifier and motor of the apparatus of Figure 3A;
Figures 7A - 7D show waveforms for various quantities in the control apparatus when arranged to drive the motors in a series manner, as shown in Figure 3A;
Figure 8 shows the functional blocks inside the motor controller of Figures 3A, 4A, 5.

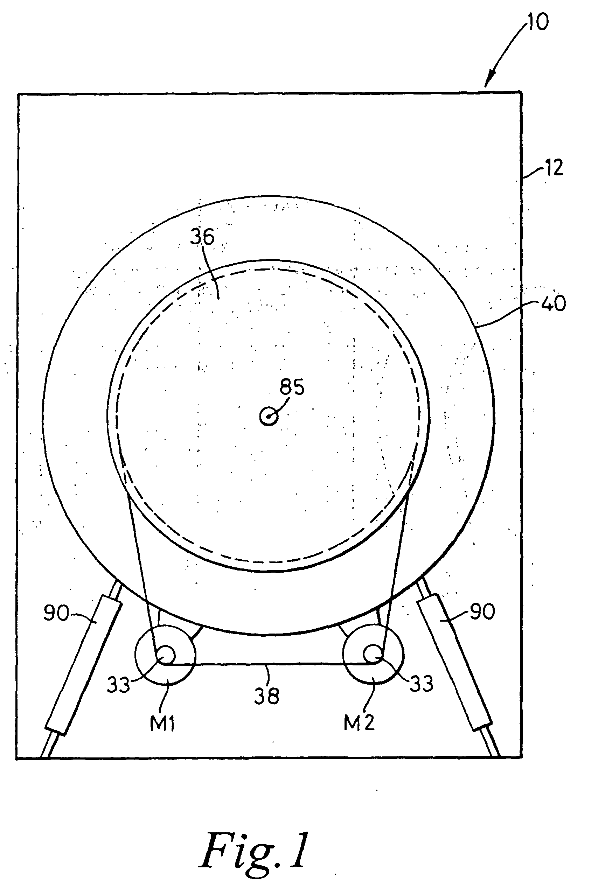

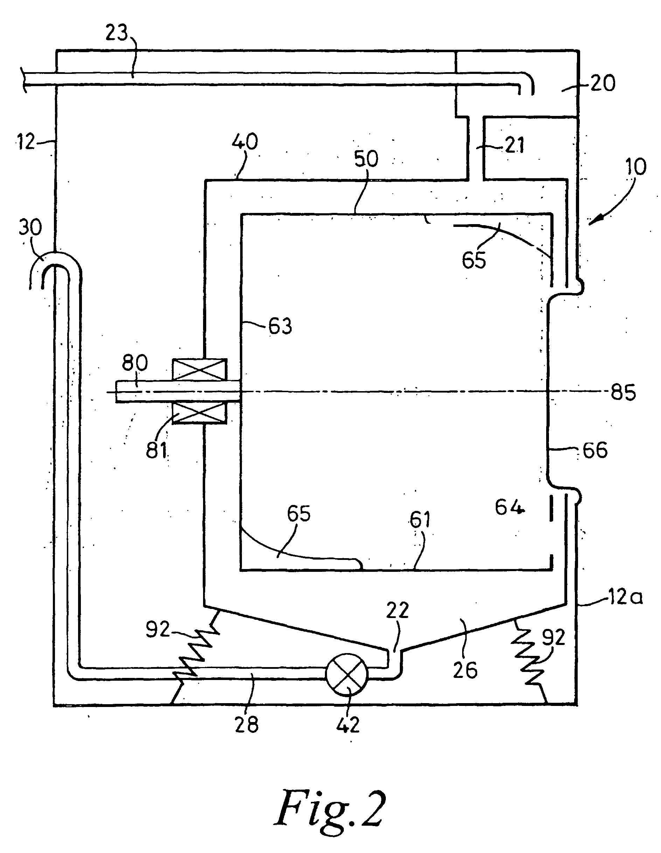

The following embodiment describes how the invention can be applied to a washing machine. Figures 1 and 2 show a washing machine 10 which includes an outer casing 12 in which a stationary tub 40 is located. A drum 50 is mounted inside the tub 40 so as to be rotatable about a shaft 80 along an axis 85. The tub 40 is also supported within the casing 12 by suspension struts 90. The tub 40 is watertight except for an inlet 21 and outlet 22. The washing machine 10 includes a soap tray 20 capable of receiving detergent in a known manner. At least one water inlet 23 communicates with the soap tray 20 and is provided with suitable means for connection to a water supply within the environment in which the washing machine 10 is to be used. A conduit 21 is provided between the soap tray 20 and the tub 40 so as to allow water introduced via the inlet 23 to enter the tub 40. The tub 40 has a sump 26 located beneath the drum 50. A drainage pipe 28 communicates with the sump 26 and leads to a water outlet 30 via which water can be discharged from the washing machine 10. A pump 42 is provided to allow water to be pumped from the sump 26 to the water outlet 30 at appropriate stages of the washing cycle carried out by the washing machine 10.

The drum 50 is rotatably mounted about the axis 85 by way of a shaft 80. The shaft 80 is mounted within a bearing 81 in a known manner, allowing the tub 40 to remain stationary whilst the drum 50 is rotatable with the shaft 80. Two motors M1, M2 are mounted to the lower outer surface of tub 40, each motor having an output drive shaft 33. The output power of the two motors is combined to drive the drum 50. Providing two motors rather than a single higher rated and heavier motor has the advantage of more evenly distributing weight of the motor across the base of the machine. Shaft 80 of the tub is connected to a gearbox (not shown) which in turn is connected to a wheel 36 (shown in Figure 1) which can rotate about the axis 85. The circumferential surface of wheel 36 has a deep groove which can receive a drive belt 38. Drive belt 38 encircles the upper surface of the grooved wheel 36 and the driven output shafts 33 of the motors M1, M2 and is of such a length as to fit firmly around the shafts 33 and wheel 36, under tension. Motor drive shafts 33 have a ridged circumferential surface which cooperates with a similarly ridged surface on the inner face of the drive belt 38 to minimise slipping of the drive belt 38 with respect to the motor drive shafts 33. In use, the motor drive shafts 33 rotate in the same direction to cause drive belt 38 to move, causing wheel 36 to rotate. Rotation of the wheel 36 is converted to a rotational movement of the drum 50 via the gearbox. A door 66 is located in the front panel 12a of the outer casing 12 to allow access to the interior of the drum 50. It is via the door 66 that a wash load can be deposited within the drum 50 before a wash cycle commences and removed from the drum 50 at the end of the wash cycle.

Drum 50 can be a single drum, as shown in Figure 2, or it can comprise two portions which are mounted such that they can be rotated with respect to one another. A drum of this type is described more fully in International Patent Application WO99/58753. The drum portions are rotated in opposite directions to one another, i.e. one portion clockwise, one counter-clockwise, but they can also be rotated together in the same direction. This increases agitation to clothing within the drum. The drum 50 is mounted in a cantilever fashion on the wall of the tub 40 remote from the door 66. The drum 50 is dimensioned so as to substantially fill the interior of the tub 40. More specifically, the drum 50 has a generally circular rear wall 63 extending from the shaft 80 towards the cylindrical wall of the tub 40, a generally cylindrical wall 61 extending generally parallel to the cylindrical walls of the tub 40 from the rear wall 63 towards the front wall of the tub 40, and a generally annular front face 64 extending from the cylindrical wall 61 towards the door 66. Sufficient clearance is allowed between the walls 61, 63, 64 and the tub 40 to prevent the drum 50 from coming into contact with the tub 40 when the drum 50 is made to spin.

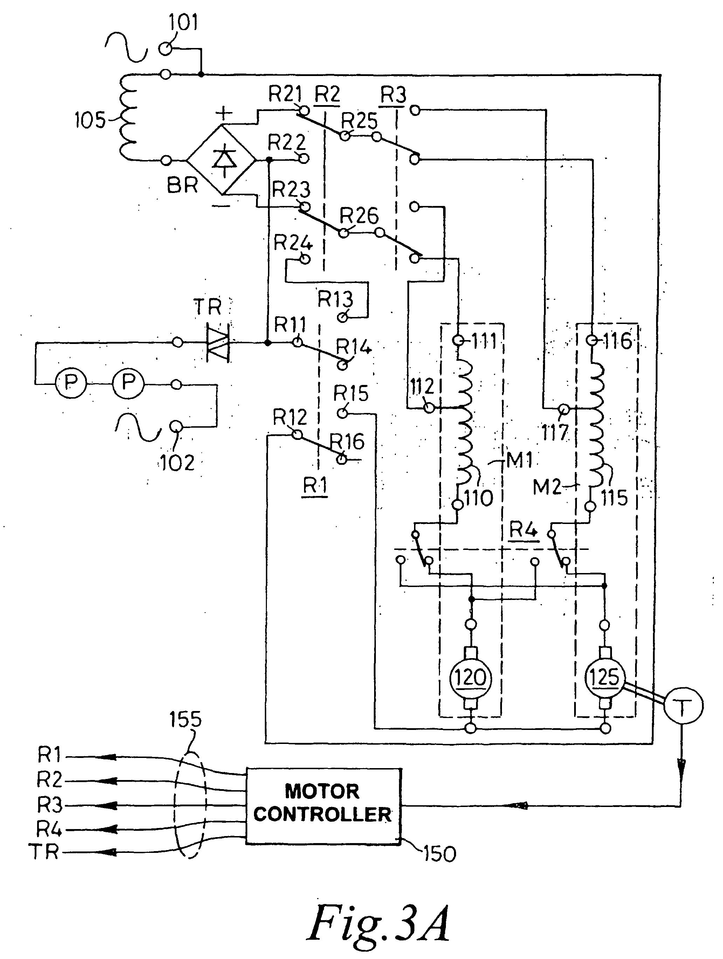

The apparatus for controlling the motors will now be described with reference to Figures 3A - 5. The main components of the control apparatus are motors M1 and M2, a bridge rectifier BR, relays R1, R2, R3, R4, a triac TR and motor controller 150. Motors M1 and M2 are universal motors and are of a similar type and rating. Motor M1 comprises a winding 110 and an armature 120 and motor M2 comprises a winding 115 and an armature 125. As previously described, the output drive shafts of both of these motors drive a belt which, via a gearbox, rotates drum 50 of the washing machine 10 at an appropriate speed and direction depending on the stage of the wash cycle. An ac mains supply is connected to terminals 101, 102. As both motors M1, M2 operate at the same speed, motor controller 150 can monitor the speed of either motor M1, M2. Motor controller 150 receives an input indicative of the speed of motor M2 from a tacho T and issues control signals to control operation of each of the relays R1 - R4 and the triac TR. Figure 8 shows the functional blocks inside controller 150. A processor 180 receives the input from tacho T which is indicative of the actual speed of the motor along with inputs from other sensors on the machine, such as a water temperature sensor, and inputs from operating controls on the control panel of the appliance. The processor follows a control program dictated by control software 185. The motor controller is preferably implemented in the form of a microcontroller with the program being stored within the microcontroller or on an external non-volatile memory device. The controller can be implemented in other ways, such as entirely in hardware, and these will be apparent to the reader and are intended to fall within the scope of this invention. While a triac is shown here, any other type of ac power switching device such as a thyristor-bridge combination can be used in place of the triac.

The relays R1 - R4 have the following purposes:
- Relay 1 connects/disconnects one side of the ac supply to the two motors M1, M2 and breaks the circuit around the two motors M1, M2, to stop any regenerative current.
- Relay 2 normally acts at the same time as Relay 1, switching in the bridge rectifier BR and connecting the motors M1, M2 in series. Under fault conditions Relay R2 will not act, stopping regeneration through the bridge rectifier.
- Relay 3 connects to either the full-field position 111, 116 or tapped-field position 112, 117 of the motor field winding 110, 115 to vary the speed at which motors M1, M2 operate.
- Relay 4 changes direction of rotation of the motors by reversing the direction of current flow through both motor armatures.

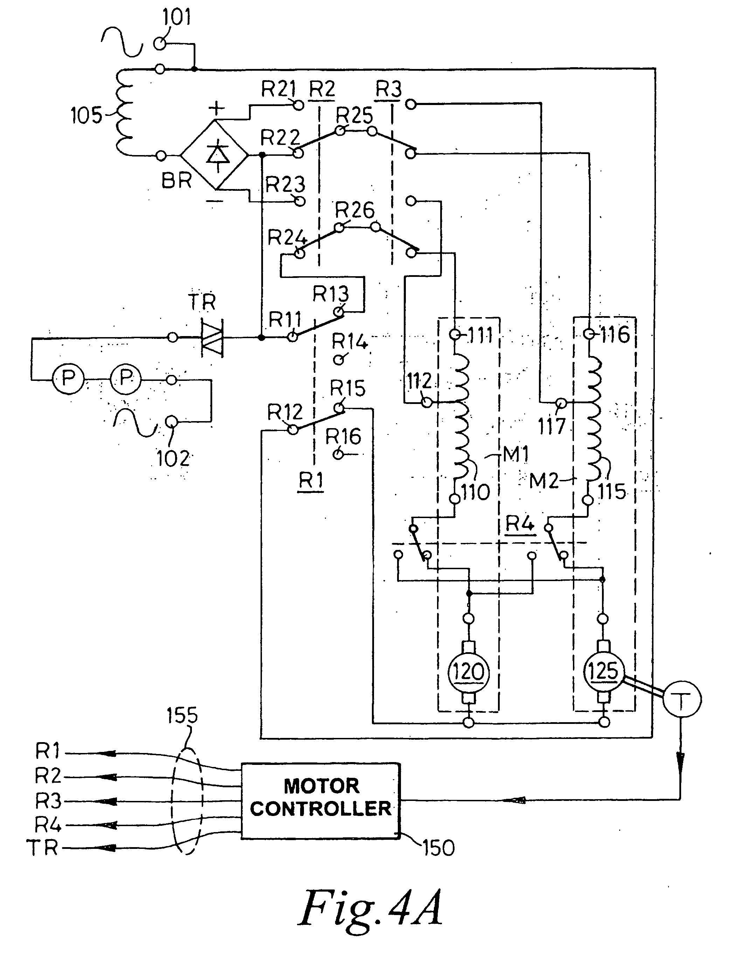

Ac terminal 101 is connected to bridge rectifier BR through a choke 105 and also to terminal R12 of relay R1. The positive output of the bridge BR connects to terminal R21 of relay R2. The negative side of the bridge is connected to terminal R23 of relay R2. The other ac side of bridge BR is connected to terminal R22 of relay R2, terminal R11 of relay R1 and also to the second ac terminal 102 via triac TR and motor protectors P. Relays R1 and R2 are switchable between the position shown in Figure 3A, for series operation of the motors M1, M2 and that position shown in Figure 4A for parallel operation of the motors M1, M2.

In order to minimise the current drawn from the mains supply, the motors are connected in series at low speed, when high torque is required to rotate the drum. At this time the motors are supplied with dc current via a bridge rectifier. This has a further benefit that it is possible to obtain a higher motor torque than would be possible with an ac supply from motors of a given lamination stack size. At high speed, the bridge rectifier is switched out of circuit, so as to supply the motors with ac current, and the motors are connected in parallel. The advantages that this scheme brings are:
- The current draw at low speed is half that which would be required with the motors connected in parallel.
- At low speed absolute current harmonics are reduced, due to the reduced current draw.
- At low speed, the series-connected motors have double the terminal voltage of parallel-connected motors, giving a smaller firing angle (i.e. greater conduction period) which further reduces harmonic content as a proportion of the total current and improves the power factor.
- Freewheeling current through the bridge rectifier during triac off-periods gives a higher r.m.s. current on the dc side of the bridge rectifier than on the ac side, and therefore greater motor torque than would normally be expected from a given ac input current.
- Smaller-stack motors can be specified than would otherwise be required to give the same output torque with ac supply at low speed.
- Because of the constant direction of current flow in dc, more carbon is transferred from one of the brushes to the commutator than from the other, resulting in unequal brush wear and premature motor failure. Switching to ac at high speed, at which most brush wear occurs, gives more even brush wear due to the bidirectional current flow and therefore gives longer motor life.
- The bridge rectifier and associated components only need to be rated to take the current when the motors are connected in series, thus reducing the component cost and size.
- The heat dissipated by the bridge rectifier is much reduced over a cycle, and so a smaller heat sink is required to dissipate the power.
- Switching the bridge rectifier out of circuit at higher speeds means that under these conditions an inductive load is seen by the supply and the firing angle is reduced, which together reduce the harmonic content of the supply current.

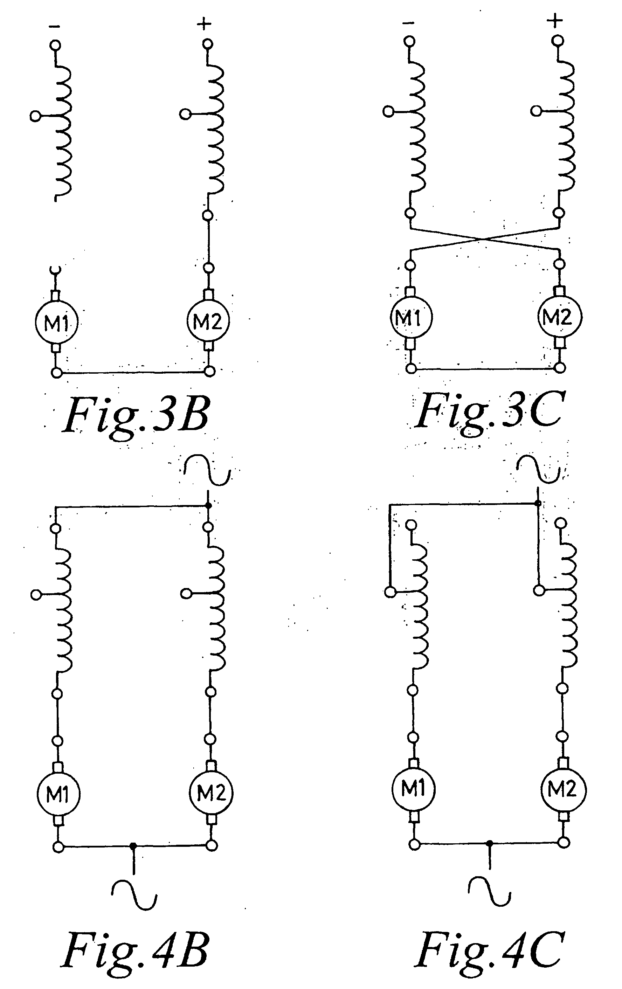

Figure 3B shows the effect of connecting the motors in series. For series operation, at relay R2 terminal R21 is connected to R25 and terminal R23 is connected to R26. Also, at relay R1, terminal R11 is connected to R14 and terminal R12 is connected to R16. Figure 3C shows the motors connected for operation in the reverse direction. To achieve this, motor controller 150 issues a control signal to cause relay R4 to switch from its first to its second position, thus causing current to flow through the series connected motors armatures 120, 125 in the opposite direction.

Figure 4B shows the effect of connecting the motors in parallel, with the full stator winding in circuit, and Figure 4C shows the effect of connecting the motors in parallel, with only part of the stator winding in circuit. For parallel operation, at relay R2 terminal R22 is connected to R25 and terminal R24 is connected to R26. Also, at relay R1, terminal R11 is connected to R13 and terminal R12 is connected to R15. Relay terminal R24 of relay R2 is connected directly to terminal R13 of relay R1.

Triac TR is controlled by motor controller 150 to turn on at a particular point during the ac waveform, at a phase angle after the zero-crossing point, known as a firing angle.

Once turned on, the triac remains in a conducting state until the current falls to zero. By varying the triac firing angle, the motor controller controls the electrical power supplied to the motors M1, M2. Each of the motor protectors P are thermal cut-outs which are physically located within motors M1, M2 and electrically form part of the series connection between the ac terminals. In the event of a motor M1, M2 overheating, the corresponding motor protector P reacts by going open-circuit to turn off the power supply to the motor. Not all applications require these protectors.

Relay R3 connects the power supply to the motors to the full-field or tapped-field position of the motor stator windings 110, 115 to provide two different speed ranges for the motor. Relay R3 connects directly to relay R2.

Washing machine 10 performs a wash cycle during which the drum 50 is rotated alternately in clockwise and counter-clockwise directions at a low speed of approximately 50rpm. This requires low speed and high torque and the motors are used in the series configuration. During a spin cycle, when the drum needs to be rotated at a much higher speed in the range of 500 - 1600rpm, the motor controller 150 issues control signals to operate the relays R1 - R4 to change to the parallel configuration. This occurs at a speed which is determined by the motor characteristics; typically around 500rpm. The tapped-field parallel configuration is used at first, and the motor controller 150 issues a control signal to operate relay R3 when the motors are required to operate at the higher speed range afforded with the full-field. Motor controller 150 ensures a smooth transition between series and parallel operation by controlling the firing angle of the triac TR. Simply switching the relays to their new position with no change to the triac firing angle would result in a sudden doubling in the voltage being applied to the motors M1, M2. Therefore, motor controller 150 increases the firing angle when switching from series to parallel operation to provide a similar effective voltage to each of the motors before and after the relays R1 - R4 are operated. The control program run by controller 150 specifies what steps the appliance should perform to perform a wash cycle. Part of the control software 185 are two sets of control settings for the relays R1 - R4 and triac TR: a first set 160 which are required for series operation and a second set 170 which are required for parallel operation.

In this scheme, the bridge rectifier BR is connected in circuit during low speed operation and out of circuit during high-speed operation. Brush wear has been found to be considerably higher (approximately twice) with the bridge in circuit than without it. As the majority of brush wear occurs during high speed operation, there is a significant benefit in terms of motor life with the bridge switched out of circuit during high speed operation. At lower speeds, the firing angle required for a given output torque is considerably increased with the bridge in circuit, due to the freewheeling of the current through the bridge. This is of great benefit at low speed. However, the freewheeling benefit of the bridge circuit is not required at higher speed, and the larger firing angle increases the harmonic content. Therefore, switching out the bridge at higher speeds improves the harmonics drawn by the machine and reduces the requirement for power factor correction. The bridge contributes a significant proportion of the heat dissipated by the heatsink, and this is highest at high speeds due to the parallel motor connection when the current is doubled. Switching out the bridge removes this heating effect, reduces the size and rating of the heatsink that is required.

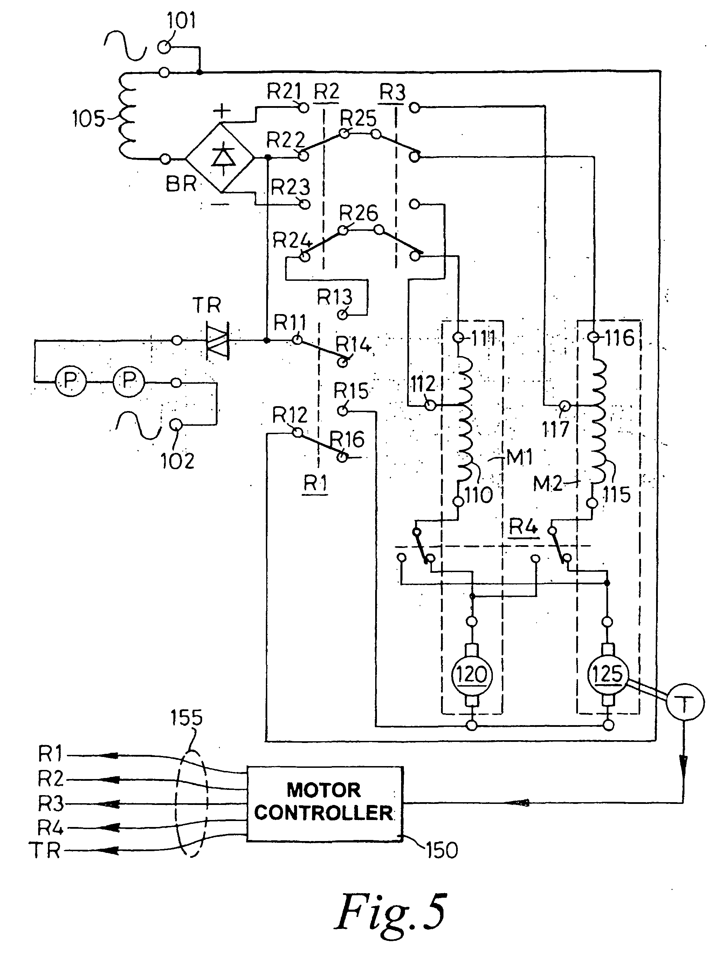

Figure 5 shows the default state of the relays R1 - R4. This state ensures that the apparatus is unpowered, with the bridge out of circuit, thus preventing regenerative braking through the bridge. This also provides protection against the conditions of a triac failure, and prevents motor damage in the event of power loss to the machine. If there is a loss of power when the motors are running at high speed, residual magnetism in the field windings 110, 115 will generate an emf in the armature which, if the bridge rectifier is in circuit, may drive current around the motor circuit, enhancing the field and further increasing the current, resulting in an avalanche effect which would damage the motors, relays and bridge.

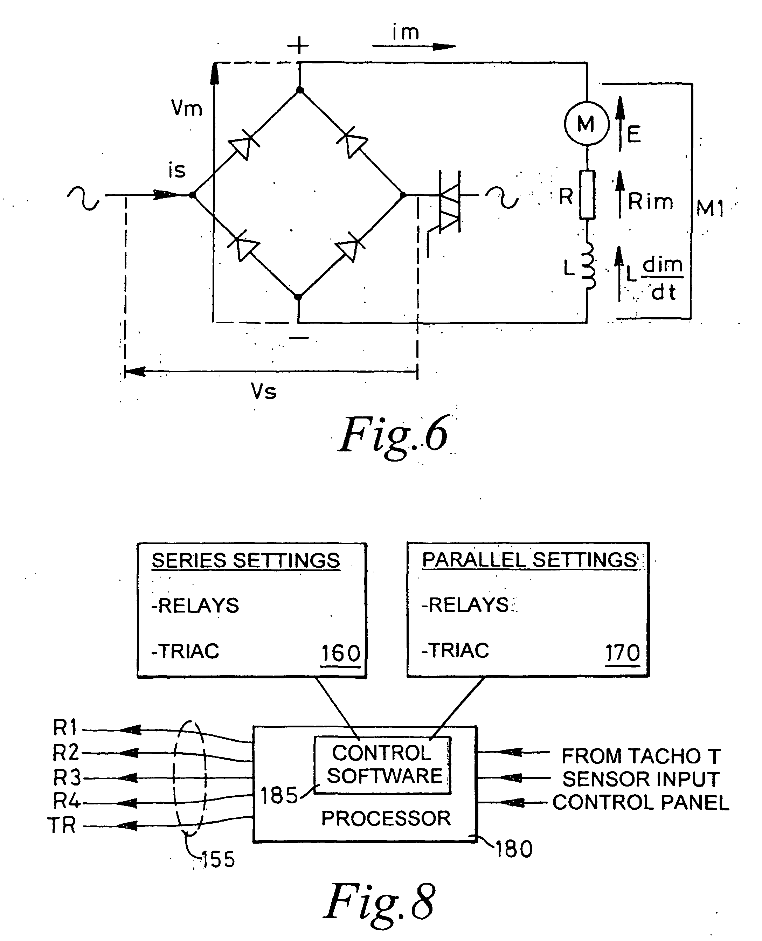

In order to more fully describe operation of the apparatus, Figure 6 shows the bridge rectifier BR and a representation of one of the motors M1, showing a simplified representation of the motor ― a resistance R, inductance L and voltage source M. Voltage across the motor (Vm) comprises a back emf across the motor (E), a voltage across the resistance Rim and a voltage across the inductance (L dim/dt) ― which is proportional to the rate of change of current.

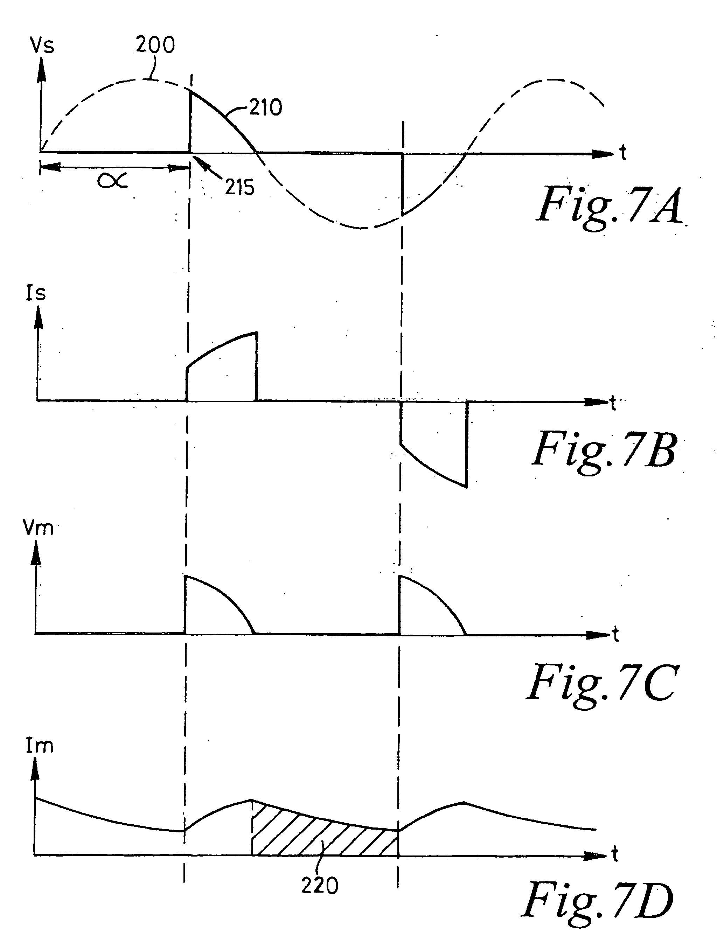

Figures 7A - 7D show waveforms for four different quantities (triac output voltage Vs and current Is, motor voltage Vm and current Im) during dc series operation. Figure 7A shows both the ac mains supply voltage 200 and the triac output voltage 210 which is applied to the bridge. Triac TR is switched on at time 215 during each half-cycle of the mains supply after a firing angle α. Figure 7B shows the resulting supply current Is for the corresponding time period and Figure 7C the motor voltage Vm. Figure 7D shows the motor current Im. The free-wheeling current through the bridge is shown by the shaded region 220. This arises due to the inductance L providing a voltage across the motors which maintains the current in the motors.

Variations will be apparent to a skilled person and are intended to fall within the scope of this invention, as defined by the claims.

## Claims

1. A drive for driving a load in an electrical apparatus, the drive comprising first and second motors for coupling to a power supply, outputs of the motors being used to drive the load, and switching means for switching the motors between:
- a series configuration, in which the motors are connected in series across the power supply and driven with a dc supply; and,
- a parallel configuration in which the motors are connected in parallel across the power supply, **characterized in that** in the parallel configuration the motors are driven with an ac supply.

2. A drive according to claim 1 wherein the switching means connects the motors in a series configuration when the load needs to be driven at a low speed and in a parallel configuration when the load needs to be driven at a high speed.

3. A drive according to claim 1 or 2 wherein the power supply is an ac supply and, in the series configuration, the switching means switches a rectifier across the ac supply to provide the dc supply.

4. A drive according to claim 3 wherein, in the parallel configuration, the switching means removes the rectifier from the circuit.

5. A drive according to any one of the preceding claims further comprising a power switching device for switching the power on during the ac cycle and a controller for controlling the firing angle of the power switching device, the controller being arranged to vary the on time for the power switching device when switching between the first and second configurations.

6. A drive according to any one of the preceding claims, further comprising means for reversing the direction of current flow through the motors when the motors are in a series configuration.

7. A drive according to claim 6 wherein the reversing means comprises a further switching means which is coupled between the armature and rotor of each motor, the further switching means being operable between a first configuration in which current flows through the motors in a first direction and a second configuration in which current flows through the motors in a second direction.

8. Electrical apparatus comprising a drive according to any one of the preceding claims.

9. Electrical apparatus according to claim 8 in the form of an appliance.

10. An electrical appliance according to claim 9 in the form of a laundry appliance wherein the load is a rotatable drum for retaining articles to be laundered.

11. An appliance according to claim 10 in the form of a washing machine.

12. A method of operating a drive for driving a load in an electrical apparatus, the drive comprising first and second motors for coupling to a power supply and whose outputs are used to drive the load, and switching means, the method comprising operating the switching means so as to switch the motors between:
- a series configuration, in which the motors are connected in series across the power supply and driven with a dc supply; and,
- a parallel configuration in which the motors are connected in parallel across the power supply and driven with an ac supply.

## Patentansprüche

1. Antrieb für das Antreiben einer Last in einem Elektrogerät, wobei der Antrieb einen ersten und einen zweiten Motor zur Kopplung an eine Stromversorgung umfasst, wobei die Ausgänge der Motoren benutzt werden, um die Last anzutreiben, sowie Schaltmittel zum Umschalten der Motoren zwischen:
- einer Reihenanordnung, bei der die Motoren zu der Stromversorgung in Reihe geschaltet sind und mit einer Gleichstromversorgung angetrieben werden, und
- einer Parallelanordnung, bei der die Motoren zu der Stromversorgung parallel geschaltet sind, **dadurch gekennzeichnet, dass** bei der Parallelanordnung die Motoren mit einer Wechselstromversorgung angetrieben werden.

2. Antrieb nach Anspruch 1, bei dem die Schaltmittel die Verbindung der Motoren in einer Serienanordnung herstellen, wenn die Last mit einer niedrigen Drehzahl angetrieben werden muss, und in einer Parallelanordnung, wenn die Last mit einer hohen Drehzahl angetrieben werden muss.

3. Antrieb nach Anspruch 1 oder 2, bei dem die Stromversorgung eine Wechselstromversorgung ist und bei dem in der Serienanordnung die Schaltmittel einen Gleichrichter hinter der Wechselstromversorgung in den Stromkreis schalten, um eine Gleichstromversorgung bereitzustellen.

4. Antrieb nach Anspruch 3, bei dem die Schaltmittel in der Parallelanordnung den Gleichrichter aus dem Stromkreis entfernen.

5. Antrieb nach einem der vorhergehenden Ansprüche, der außerdem ein Leistungsschaltgerät zum Einschalten der Leistung während des Wechselstromzyklus und einen Controller zum Steuern des Zündwinkels des Leistungsschaltgerätes umfasst, wobei der Controller zum Verändern der Einschaltdauer des Leistungsschaltgeräts beim Umschalten zwischen der ersten und der zweiten Anordnung ausgelegt ist.

6. Antrieb nach einem der vorhergehenden Ansprüche, der außerdem Mittel für die Umkehr der Richtung des Stromflusses durch die Motoren umfasst, wenn die Motoren in einer Serienanordnung sind.

7. Antrieb nach Anspruch 6, bei dem die Umkehrmittel ein zusätzliches Schaltmittel umfassen, das zwischen den Anker und den Rotor eines jeden Motors geschaltet ist, wobei das zusätzliche Schaltmittel sich betreiben lässt, um die Umschaltung zwischen einer ersten Anordnung, in der der Strom durch die Motoren in einer ersten Richtung fließt, und einer zweiten Anordnung, in der der Strom durch die Motoren in einer zweiten Richtung fließt, zu ermöglichen.

8. Elektrogerät, das einen Antrieb nach einem der vorhergehenden Ansprüche umfasst.

9. Elektrogerät nach Anspruch 8 in Form eines Haushaltsgeräts.

10. Elektrogerät nach Anspruch 9 in Form eines Wäschegeräts, bei dem die Last eine drehbare Trommel zum Aufnehmen und Halten der zu waschenden Gegenstände ist.

11. Haushaltsgerät nach Anspruch 10 in Form einer Waschmaschine.

12. Verfahren für den Betrieb eines Antriebs, um eine Last in einem Elektrogerät anzutreiben, wobei der Antrieb einen ersten und einen zweiten Motor zur Kopplung an eine Stromversorgung umfasst und wobei deren Ausgänge benutzt werden, um die Last anzutreiben, sowie Schaltmittel, wobei das Verfahren den Betrieb der Schaltmittel umfasst, um die Motoren umzuschalten zwischen:
- einer Reihenanordnung, bei der die Motoren zu der Stromversorgung in Reihe geschaltet sind und mit einer Gleichstromversorgung angetrieben werden, und
- einer Parallelanordnung, bei der die Motoren zu der Stromversorgung parallel geschaltet sind und mit einer Wechselstromversorgung angetrieben werden.

## Revendications

1. Commande pour commander une charge dans un appareil électrique, la commande comprenant un premier et un second moteurs destinés au couplage à une alimentation électrique, les sorties des moteurs étant utilisées pour commander la charge, et un moyen de commutation pour commuter les moteurs entre:
- une configuration série dans laquelle les moteurs sont connectés en série aux bornes de l'alimentation électrique et commandés par une alimentation en courant continu; et
- une configuration parallèle dans laquelle les moteurs sont connectés en parallèle aux bornes de l'alimentation électrique,
**caractérisée par le fait que**, dans la configuration parallèle, les moteurs sont commandés par une alimentation en courant alternatif.

2. Commande selon la revendication 1, dans laquelle le moyen de commutation connecte les moteurs dans une configuration série lorsque la charge a besoin d'être commandée à vitesse basse et dans une configuration parallèle lorsque la charge a besoin d'être commandée à vitesse élevée.

3. Commande selon la revendication 1 ou 2, dans laquelle l'alimentation électrique est une alimentation en courant alternatif et, dans la configuration série, le moyen de commutation commute un redresseur aux bornes de l'alimentation en courant alternatif pour fournir l'alimentation en courant continu.

4. Commande selon la revendication 3, dans laquelle, dans la configuration parallèle, le moyen de commutation supprime le redresseur du circuit.

5. Commande selon l'une quelconque des revendications précédentes, comprenant, en outre, un dispositif de commutation de puissance pour activer la puissance pendant le cycle en courant alternatif et un dispositif de contrôle pour contrôler l'angle d'amorçage du dispositif de commutation de puissance, le dispositif de contrôle étant adapté pour faire varier le temps d'activation pour le dispositif de commutation de puissance lorsqu'il commute entre la première et la seconde configurations.

6. Commande selon l'une quelconque des revendications précédentes, comprenant, en outre, un moyen pour inverser le sens de circulation du courant à travers les moteurs lorsque ceux-ci sont dans une configuration série.

7. Commande selon la revendication 6, dans laquelle le moyen d'inversion comprend un moyen de commutation additionnel qui est couplé entre l'induit et le rotor de chaque moteur, le moyen de commutation additionnel pouvant fonctionner entre une première configuration dans laquelle le courant circule à travers les moteurs dans un premier sens et une seconde configuration dans laquelle le courant circule à travers les moteurs dans un second sens.

8. Appareil électrique comprenant une commande selon l'une quelconque des revendications précédentes.

9. Appareil électrique selon la revendication 8 sous forme d'un appareil électroménager.

10. Appareil électrique selon la revendication 9, sous forme d'un appareil de laverie, dans lequel la charge est un tambour rotatif pour contenir les articles à laver.

11. Appareil selon la revendication 10 sous forme d'une machine à laver.

12. Procédé pour faire fonctionner une commande pour commander une charge dans un appareil électrique, la commande comprenant un premier et un second moteurs destinés au couplage à une alimentation électrique et dont les sorties sont utilisées pour commander la charge, et un moyen de commutation, le procédé consistant à faire fonctionner le moyen de commutation de manière à commuter les moteurs entre:
- une configuration série dans laquelle les moteurs sont connectés en série aux bornes de l'alimentation électrique et commandés par une alimentation en courant continu; et
- une configuration parallèle dans laquelle les moteurs sont connectés en parallèle aux bornes de l'alimentation électrique et commandés par une alimentation en courant alternatif.
